(19) Europäisches Patentamt / European Patent Office / Office européen des brevets

(11) **EP 4 679 402 A1**

(12) **EUROPEAN PATENT APPLICATION**
published in accordance with Art. 153(4) EPC

(43) Date of publication: **14.01.2026 Bulletin 2026/03**

(21) Application number: **25732300.6**

(22) Date of filing: **20.02.2025**

(51) International Patent Classification (IPC):
***G08G 3/02*** (2006.01) ***G06F 3/14*** (2006.01) ***G06F 3/048*** (2013.01) ***B63B 49/00*** (2006.01) ***B63B 79/20*** (2020.01) ***B63H 21/21*** (2006.01) ***B63B 79/30*** (2020.01) ***B63B 79/40*** (2020.01) ***B63B 43/18*** (2006.01)

(52) Cooperative Patent Classification (CPC):
**B63B 43/18; B63B 49/00; B63B 79/20; B63B 79/30; B63B 79/40; B63H 21/21; G06F 3/048; G06F 3/14; G08G 3/02**

(86) International application number: **PCT/KR2025/099495**

(87) International publication number: **WO 2025/234864 (13.11.2025 Gazette 2025/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.05.2024 KR 20240060789**
**24.10.2024 KR 20240146445**

(71) Applicant: **Avikus Co., Ltd.**
**Seoul 06234 (KR)**

(72) Inventors:
- **KO, Kwangsung**
**Seoul 06234 (KR)**
- **JUNG, Doyeon**
**Seoul 06234 (KR)**
- **KIM, Inbeom**
**Seoul 06234 (KR)**

(74) Representative: **Zacco Sweden AB**
**P.O. Box 5581**
**Löjtnantsgatan 21**
**114 85 Stockholm (SE)**

(54) **METHOD AND APPARATUS FOR DETERMINING RISK OF SHIP**

(57) A device according to an aspect includes: at least one memory; and at least one processor configured to generate first data and second data by using obtained information about another ship, determine a risk of an own ship based on whether risk determination parameters satisfy risk determination criteria that are determined based on the first data and the second data, and generate a navigation control command for the own ship, based on the determined risk of the own ship.

FIG. 1

10
1

EP 4 679 402 A1

## Description

### Technical Field

The present disclosure relates to a method and device for determining a risk of a ship.

### Background Art

The International Regulations for Preventing Collisions at Sea (COLREG Rules) define the status of ships based on the relationship between ships, however, navigators of ships often face challenges in identifying the relationship between ships.

According to the International Regulations for Preventing Collisions at Sea, an own ship must respond differently depending on the type of another ship.

For example, the International Regulations for Preventing Collisions at Sea stipulate that a ship with superior maneuvering performance should give way first, and thus, when a large ship, which is an own ship, encounters a small craft, which is another ship, the small craft, which generally has superior maneuvering performance, should give way. Furthermore, when encountering another ship that is a small craft but has no intention or ability to give way, such as a fishing ship engaged in fishing or a ship with restricted manoeuvrability, the own ship should give way.

As described above, during a ship's voyage, numerous and various encounter situations with other ships may occur, and there are many factors to consider to determine the relationship between the own ship and other ships, navigators often face challenges in making decisions directly in each instance.

Furthermore, there has been a difficulty in determining a risk, considering the type of the other ship and the encounter situation between the other ship and the own ship.

The present disclosure is to provide a method of determining a risky situation of an own ship, considering the type of another ship and an encounter situation between the own ship and the other ship.

### Disclosure of Invention

### Technical Problem

Provided are a method and device for determining a risk of a ship. In addition, provided is a computer-readable recording medium having recorded thereon a program for causing a computer to execute the method. The objectives of the present disclosure are not limited to those described above, and other objectives may be obtained.

### Solution to Problem

According to an aspect of the present disclosure, there may be provided a method of determining a risk of a ship, the method including: generating first data based on ship type information about another ship and navigation status information about the other ship, which are obtained by using at least one sensor; generating second data based on ship operation information about the other ship and navigation status information about the own ship, which are obtained by using the sensor; and determining a risk of the own ship by using risk determination criteria that are determined based on the first data and the second data.

According to another aspect of the present disclosure, a device includes: a memory storing at least one program; and at least one processor configured to execute the at least one program, wherein the at least one processor is further configured to generate first data and second data by using obtained information about another ship, determine a risk of an own ship based on whether risk determination parameters satisfy risk determination criteria that are determined based on the first data and the second data, and generate a navigation control command for the own ship, based on the determined risk of the own ship.

According to another aspect of the present disclosure, a computer-readable recording medium includes a recording medium recording thereon a program for causing a computer to execute the above-described method.

### Advantageous Effects of Invention

The present disclosure may help navigators of ships to understand a relationship between an own ship and another ship.

In addition, the present disclosure may provide stability to navigation of a ship by determining a risk of an own ship according to a relationship between the own ship and another ship and the type of the other ship.

In addition, computing resources may be saved by calculating a collision avoidance strategy only for other ships that an own ship needs to avoid.

However, the effects of the embodiments are not limited to the foregoing, and other effects that are not mentioned herein may be clearly understood by those of skill in the art from the description of the present disclosure.

## Brief Description of Drawings

FIG. 1 is a diagram for describing an example of a method of determining a risk of a ship, according to an embodiment.
FIG. 2 is a configuration diagram for describing an example of a device for determining a risk of a ship, according to an embodiment.
FIG. 3 is a flowchart for describing an example of a method of determining a risk of a ship, according to an embodiment.
FIGS. 4A and 4B are diagrams for describing an example of a method of generating first data, according to an embodiment.
FIG. 5 is a flowchart for describing an example of a method of determining an encounter situation between an own ship and another ship, that is, a method of generating second data, according to an embodiment.
FIG. 6 is a diagram for describing an example of a method of determining a possibility of collision between an own ship and another ship, according to an embodiment.
FIG. 7 is a diagram for describing an example of a plurality of areas according to an embodiment.
FIGS. 8A to 8F are diagrams for describing a method of deriving a relationship between an own ship and another ship in each of a plurality of areas, according to an embodiment.
FIG. 9A is a diagram for describing an example of a method of generating a first sub-criterion based on a first table, according to an embodiment, and FIG. 9B is a diagram for describing an example of a method of generating a second sub-criterion based on a second table, according to an embodiment.
FIGS. 10A and 10B are diagrams for describing an example of a method of determining a risk of a ship, according to an embodiment.

## Best Mode for Carrying out the Invention

A device according to an aspect includes: at least one memory; and at least one processor configured to generate first data and second data by using obtained information about another ship, determine a risk of an own ship based on whether risk determination parameters satisfy risk determination criteria that are determined based on the first data and the second data, and generate a navigation control command for the own ship, based on the determined risk of the own ship.

## Mode for the Invention

Terms used in embodiments are selected as currently widely used general terms as possible, which may vary depending on intentions or precedents of one of ordinary skill in the art, emergence of new technologies, and the like. In addition, in certain cases, there are also terms arbitrarily selected by the applicant, and in this case, the meaning thereof will be defined in detail in the description. Therefore, the terms used herein should be defined based on the meanings of the terms and the details throughout the present description, rather than the simple names of the terms.

Throughout the present specification, when a part "includes" a component, it means that the part may additionally include other components rather than excluding other components as long as there is no particular opposing recitation. In addition, as used herein, terms such as "... unit" or "... module" denote a unit that performs at least one function or operation, which may be implemented as hardware or software or a combination thereof.

In addition, although terms such as "first" or "second" may be used herein to describe various elements, these elements should not be limited by these terms. These terms may be only used to distinguish one element from another.

Hereinafter, the present disclosure will be described in detail with reference to the accompanying drawings. The embodiments may, however, be embodied in many different forms and should not be construed as being limited to the embodiments set forth herein.

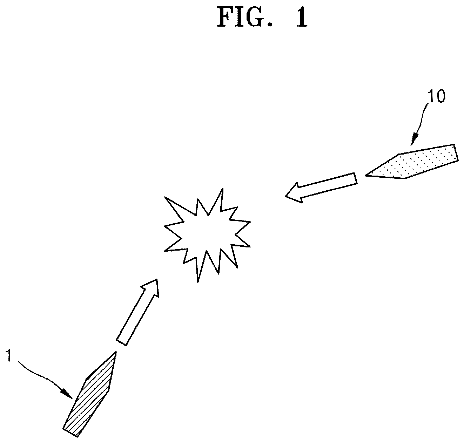

FIG. 1 is a diagram for describing an example of a method of determining a risk of a ship, according to an embodiment.

Referring to FIG. 1, an own ship 1 and another ship 10 have a possibility of colliding with each other based on their respective directions of travel.

A navigator or an autonomous navigation system of the own ship 1 needs to determine whether there is a possibility of collision between the own ship 1 and the other ship 10, and take measures, such as modifying a navigation route.

In detail, when the other ship 10 or a certain obstacle is detected, the navigator or autonomous navigation system of the own ship 1 may determine a risk of the own ship 1 and, based on the determined risk, determine whether to avoid the other ship 10 or obstacle.

For example, the navigator or autonomous navigation system of the own ship 1 may derive a relationship between the own ship 1 and the other ship 10 by using information about the own ship 1 and information about the other ship 10 so as to assess the risk, and use the derived relationship as a risk determination parameter. In addition, the navigator or autonomous navigation system of the own ship 1 may classify a grade according to the type of the other ship 10 or obstacle, and use the grade as a risk determination parameter.

Thus, the navigator or autonomous navigation system of the own ship 1 may determine a risk with respect to the other ship 10 by using at least one of data about the derived relationship between the own ship 1 and the other ship 10, and data about classification of the other ship 10, and based on the determined risk, determine whether the own ship 1 needs to avoid the other ship 10.

Here, a risk determination criterion of the own ship 1 may be set by using ship operation information about the own ship 1 and the other ship 10, and the risk of the own ship 1 may be determined according to whether the risk determination parameter satisfies the set risk determination criterion.

Furthermore, the navigator or autonomous navigation system of the own ship 1 may determine an avoidance target for the own ship 1 based on a risk determination result, and generate an avoidance route according to the determined avoidance target.

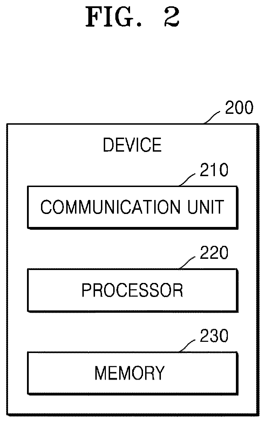

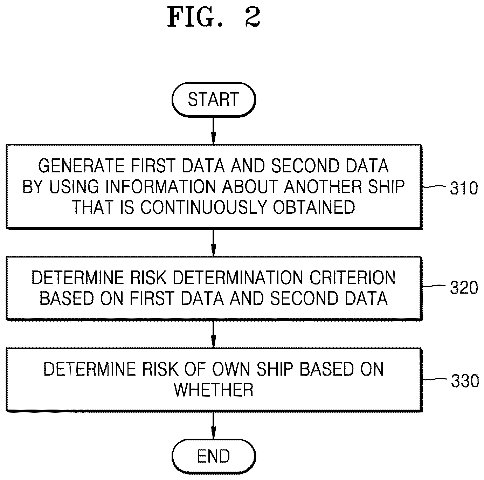

FIG. 2 is a configuration diagram for describing an example of a device for determining a risk of a ship, according to an embodiment.

Referring to FIG. 2, a device 200 for determining a risk of a ship (hereinafter, referred to as 'device') may include a communication unit 210, a processor 220, and a memory 230. FIG. 2 illustrates the device 200 including only the components associated with an embodiment. Thus, it is obvious to those of skill in the art that other general-purpose components may be further included in addition to the components illustrated in FIG. 2.

The communication unit 210 may include one or more components for performing wired/wireless communication with an external server or an external device. For example, the communication unit 210 may include a short-range communication unit (not shown) and a mobile communication unit (not shown) for communication with an external server or an external device.

The processor 220 controls the overall operation of the device 200. For example, the processor 220 may execute programs stored in the memory 230 to control the overall operation of an input unit (not shown), a display (not shown), the communication unit 210, the memory 230, and the like.

The processor 220 may be implemented by using at least one of application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, and other electrical units for performing functions.

The processor 220 may execute programs stored in the memory 230 to control the operation of the device 200. For example, the processor 220 may perform at least a part of a method of determining a risk of a ship, which will be described below with reference to FIGS. 3 to 9B.

The memory 230 is hardware for storing various pieces of data processed by the device 200, and may store a program for the processor 220 to perform processing and control.

For example, the memory 230 may store various pieces of data, such as specification information about a ship, ship operation information about a ship, navigation image information about a ship, weather forecast information, maritime information, control information about a ship, information about an object, or data generated according to an operation of the processor 220. In addition, the memory 230 may store an operating system (OS) and at least one program (e.g., a program required for the processor 220 to operate).

The memory 230 may include random-access memory (RAM) such as dynamic RAM (DRAM) or static RAM (SRAM), read-only memory (ROM), electrically erasable programmable ROM (EEPROM), a compact disc-ROM (CD-ROM), a Blu-ray or other optical disk storage, a hard disk drive (HDD), a solid-state drive (SSD), or flash memory.

FIG. 3 is a flowchart for describing an example of a method of determining a risk of a ship, according to an embodiment.

Referring to FIG. 3, a method of determining a risk of a ship may include operations 310 to 330. However, the present disclosure is not limited thereto, and other general-purpose operations other than those shown in FIG. 3 may be further included in the method of determining a risk of a ship. In addition, as described above with reference to FIGS. 1 and 2, at least one of the operations in the flowchart of FIG. 3 may be processed by a processor.

In operation 310, the processor may generate first data and second data by using information about another ship. The first data may be data associated with classification of the other ship, and the second data may be data associated with a relationship between the own ship and the other ship.

The information about the other ship may include at least part of ship type information about the other ship, navigation status information about the other ship, and ship operation information about the other ship. The information about the other ship may be obtained through a certain sensor or device capable of obtaining a speed, a position, and the like of the other ship. For example, the information about the other ship may be information obtained by using a sensor such as an automatic identification system (AIS), a radar, or a lidar, but is not limited thereto. The information about the other ship may be periodically updated. The information about the other ship may be continuously obtained.

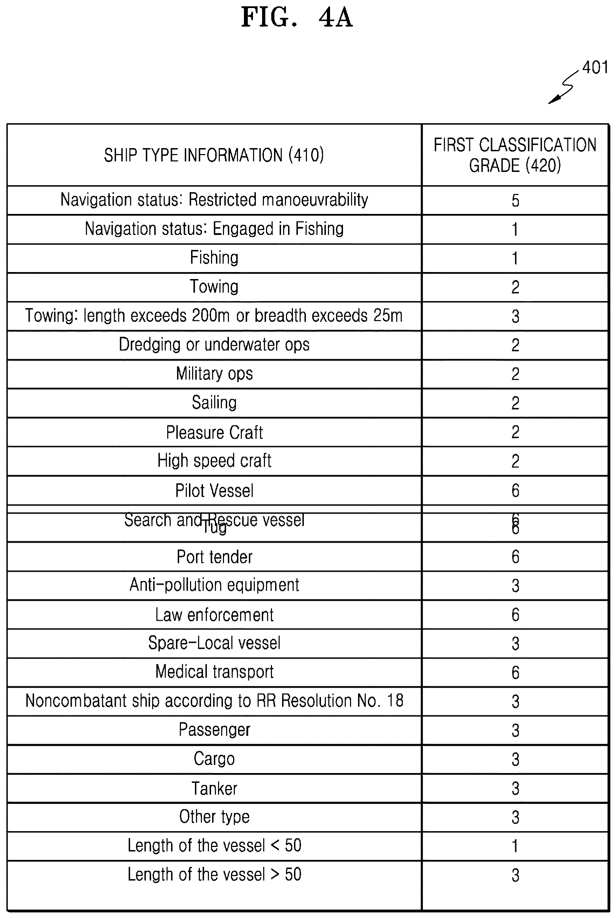

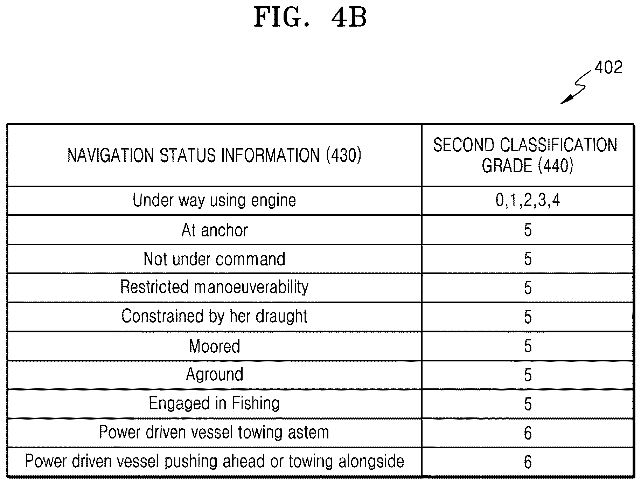

The first data may be data associated with classification of the other ship. The first data may be generated by using at least one prestored classification table. In detail, the first data may be generated by using at least one classification grade determined by using the at least one prestored classification table. The processor may generate the first data based on at least one of a prestored classification table associated with the ship type information about the other ship, and a prestored classification table associated with the navigation status information about the other ship. A method of generating the first data will be described below in more detail with reference to FIGS. 4A and 4B.

According to an embodiment, the first data may be generated by comprehensively using information obtained from sensors. In this case, the above-described classification tables may not be used. In this case, the first data may be determined by integrating information obtained through at least some of a camera, a radar, a lidar, and a sonar, and a classification grade may be assigned to the corresponding other ship based on the determined information about the other ship.

The second data may include data associated with a relationship between the own ship and the other ship. The second data may be generated based on a heading angle of the other ship and travel speed information about the other ship. In detail, the second data may be generated by using an encounter situation between the own ship and the other ship, and the status of the own ship, which are determined based on the heading angle and travel speed information of the other ship.

The processor may generate the second data by using the ship operation information about the other ship and the first data. The processor may perform preprocessing on each of the ship operation information about the other ship and the first data, and generate the second data based on the preprocessed ship operation information about the other ship and the preprocessed first data. The preprocessing may include at least one of filtering the ship operation information about the other ship, and determining the reliability of the ship operation information about the other ship or the first data. The ship operation information about the other ship may include at least some of a speed, a position, a direction angle, and identifier (ID) information of the other ship. For example, the processor may perform filtering on at least part of the ship operation information about the other ship, and determine the reliability of the remaining part. For example, the processor may perform filtering on each of the speed, position, and direction angle of the other ship, and determine the reliability of the ID information and the first data.

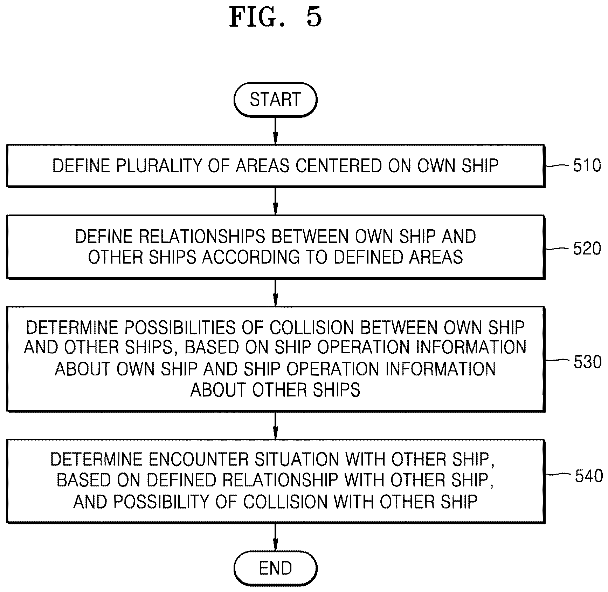

For example, the processor may generate a plurality of areas based on a position of the own ship, and determine an encounter situation between the own ship and another ship, based on ship operation information about other ships located in the plurality of generated areas, and ship operation information about the own ship. The processor may generate the second data based on the plurality of areas and an encounter situation with the other ship. A method of generating the second data will be described below in more detail with reference to FIGS. 5 to 8F.

In operation 320, the processor may determine a risk determination criterion based on the first data and the second data.

For example, the processor may determine the risk determination criterion based on the first data, the second data, and prestored tables. Here, the prestored tables may include a first table corresponding to the first data and a second table corresponding to the second data.

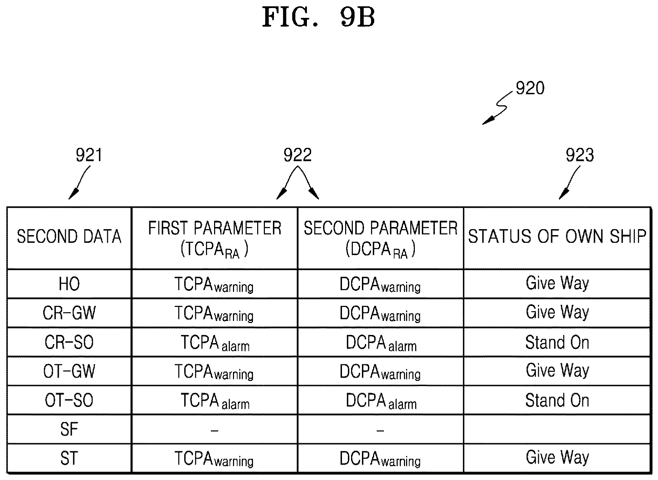

For example, the processor may generate a first sub-criterion based on the first data and the first table, and generate a second sub-criterion based on the second data and the second table. The processor may determine, as the risk determination criterion, any one of the first sub-criterion and the second sub-criterion, based on a preset rule. A method of determining the risk determination criterion will be described below in more detail with reference to FIG. 9B.

In operation 330, the processor may determine a risk of the own ship based on the determined risk determination criterion. The processor may generate risk determination parameters to determine a risk of the own ship based on the determined risk determination criterion.

The risk determination parameters may be certain determination elements for determining whether the determined risk determination criterion is satisfied. That is, the processor may generate certain determination elements, that is, at least one risk determination parameter, for determining whether the determined risk determination criterion is satisfied. Risk determination parameters may be generated for each other ship that is subject to risk determination. The risk determination parameters may include a first risk determination parameter that is associated with time, and a second risk determination parameter that is associated with distance, which are calculated based on ship operation information about the own ship, and ship operation information about the other ship.

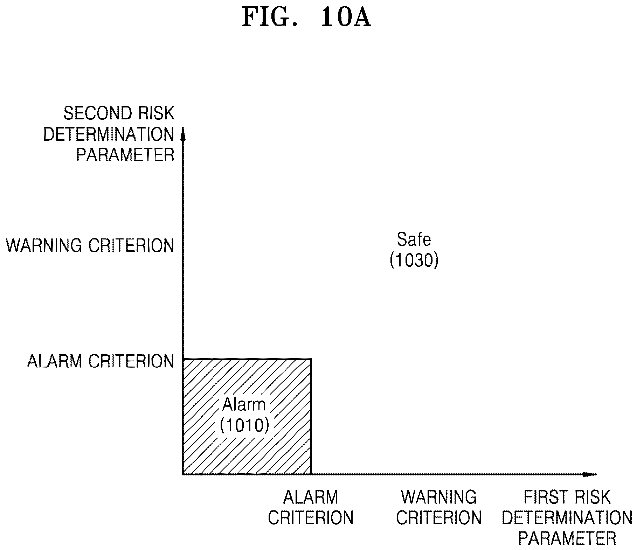

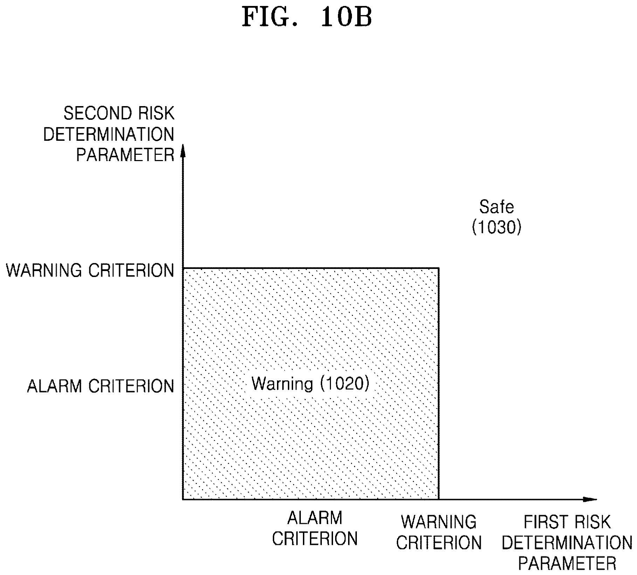

The processor may determine whether the risk determination parameters of the own ship with respect to the other ship satisfy the risk determination criterion. For example, when both the first risk determination parameter and the second risk determination parameter satisfy the risk determination criterion, the processor may determine the other ship as a hazardous object. A risk determination method will be described below in more detail with reference to FIGS. 10A and 10B.

Hereinafter, a method of determining a risk of a ship, described above with reference to FIG. 3, will be described in more detail with reference to FIGS. 4A to 9B.

FIGS. 4A and 4B are diagrams for describing a method of generating first data, according to an embodiment. FIG. 4A is a diagram for describing an example of a classification table for generating first data, according to an embodiment, and FIG. 4B is a diagram for describing another example of a classification table for generating first data, according to an embodiment. Hereinafter, with reference to FIGS. 4A and 4B, an example of a method, performed by a processor, of generating first data based on a first classification grade and a second classification grade will be described.

First, referring to FIG. 4A, the processor may determine a first classification grade 420 of another ship by using a prestored first classification table 401 associated with ship type information 410 about other ships. Here, the ship type information 410 about other ships may refer to static data collected through a sensor (e.g., an AIS). The ship type information 410 about other ships may include, but is not limited to, small crafts ('small craft'), ships with restricted maneuverability ('restricted maneuverability'), ships engaged in fishing ('engaged in fishing'), fishing ships ('fishing'), medical transport ships ('medical transport'), pilot boats ('pilot boat'), cargo ships ('cargo'), etc. The first classification table 401 may be a table in which grades are assigned according to the ship type information 410 about other ships. For example, ship type information 410 about another ship may be assigned any one of grades 1 to 6. For example, a ship type similar to fishing ships ('fishing') may be given grade 1, a ship type similar to small crafts ('small craft') may be given grade 2, a ship type similar to commercial vessels ('commercial vessel') may be given grade 3, a ship type similar to ships with restricted maneuverability ('restricted maneuverability') may be given grade 5, and a ship type similar to pilot boats ('pilot boat') may be given grade 6. According to an embodiment, a ship with other-ship information that is not included in the first classification table 401 ('undefined ship') may be given grade 0.

The processor may determine a first classification grade 420 corresponding to ship type information 410 about another ship, based on the prestored first classification table 401. For example, when obtained ship type information 410 about another ship is 'fishing', the processor may determine the first classification grade 420 of the other ship as grade 1. As another example, when obtained ship type information 410 about another ship is 'restricted maneuverability', the processor may determine the first classification grade 420 of the other ship as grade 5.

Referring to FIG. 4B, the processor may determine a second classification grade 440 of another ship by using a prestored second classification table 402 associated with navigation status information 430 about other ships. Here, the navigation status information 430 about other ships may refer to dynamic data collected through a sensor (e.g., an AIS). The navigation status information 430 about other ships may include, but is not limited to, a state of being underway using the engine ('under way using engine'), a state of being anchored after lowering the anchor ('at anchor'), a state of being engaged in fishing ('engaged in fishing'), etc. The second classification table 402 may be a table in which grades are assigned according to the navigation status information 430 about other ships. Navigation status information 430 about another ship may be assigned any one of grades 1 to 6. For example, navigation status information included in normal navigation states using an engine ('under way using engine') may be given grade 0, navigation status information included in stationary states ('at anchor') may be given grade 5, and navigation status information included in approach-permitted states such as in pilot boats may be given grade 6. According to an embodiment, the second classification table 402 defines different grades for different ship states, but grade classifications may be added or omitted, and the present disclosure is not limited to this example.

For example, the processor may obtain navigation status information 430 about a state of another ship, from a certain sensor. In addition, the processor may determine the second classification grade 440 of the other ship corresponding to the obtained navigation status information 430 about the other ship, based on the prestored second classification table 402.

For example, when the obtained navigation status information 430 about the other ship is 'at anchor', the processor may determine the second classification grade 440 of the other ship as grade 5. As another example, when the obtained navigation status information 430 about the other ship is 'engaged in fishing', the processor may determine the second classification grade 440 of the other ship as grade 5. Thus, the processor may determine the second classification grade 440 corresponding to the navigation status information 430 about the other ship, based on the prestored second classification table 402.

For example, the processor may generate first data based on the determined first classification grade 420 and/or second classification grade 440. In a case in which the processor generates first data by using both the determined first classification grade 420 and second classification grade 440, the processor may generate the first data by comparing the first classification grade 420 with the second classification grade 440.

The processor may determine the first data by comparing the first classification grade 420 with the second classification grade 440. The processor may determine the first data based on the second classification grade 440.

For example, when the second classification grade 440 is grade 0, the processor may determine the first classification grade 420 as the first data. For example, when the first classification grade 420 is grade 1 and the second classification grade 440 is grade 0, the first classification grade 420, i.e., grade 1, may be determined as the first data. In detail, when the ship type information 410 about the other ship is 'cargo' and thus the first classification grade 420 is grade 3, and the navigation status information 430 about the other ship is 'under way using engine' and thus the second classification grade 440 is grade 0, the processor may determine grade 3 as the first data.

For example, when the second classification grade 440 is not grade 0, the processor may determine the second classification grade 440 as the first data. When the second classification grade 440 is not grade 0, the second classification grade 440 may be prioritized over the first classification grade 420. For example, when the first classification grade 420 is grade 4 and the second classification grade 440 is grade 5 or 6, the processor may determine the second classification grade 440 as the first data. In detail, when the ship type information 410 about the other ship is 'cargo' and thus the first classification grade 420 is grade 3, and the navigation status information 430 about the other ship is 'at anchor' and thus the second classification grade 440 is grade 5, the processor may determine grade 5 as the first data.

In addition, the processor may perform preprocessing on the ship operation information about the other ship by using at least one filter. Here, the ship operation information about the other ship may include, but is not limited to, at least some of identifier (ID) information, speed-over-ground (SOG) information, course-over-ground (COG) information, and position information about the other ship. SOG may refer to information indicating how fast the ship is moving relative to the ground surface, and COG may refer to information indicating the direction in which the ship is moving relative to the ground surface.

The processor may perform preprocessing by using filters corresponding to respective pieces of information included in the ship operation information about the other ship. For example, the processor may perform filtering on data associated with each of the SOG information and the COG information about the other ship, and determine the reliability of the ID information.

For example, the processor may perform preprocessing on the SOG information about the other ship by using a first filter configured to filter SOG information. Here, the first filter may be configured to calculate an average of SOG values of the other ship that are obtained during a preset time and, when the difference between the calculated SOG average value and the current SOG value of the other ship is greater than an SOG limit value, determine the SOG average value as the current SOG value of the other ship.

For example, the processor may perform preprocessing on the COG information about the other ship by using a second filter configured to filter COG information. Here, the second filter may be configured to calculate an average of COG values of the other ship that are obtained during a preset time and, when the difference between the calculated COG average value and the current COG value of the other ship is greater than a COG limit value, determine the COG average value as the current COG value of the other ship.

For example, the processor may perform preprocessing on the ID information about the other ship. The processor may store ID information about the other ship that is obtained during a preset time, and determine the reliability of the ID information based on a matching ratio of the ID information stored during the preset time. For example, when pieces of ID information about the other ship that are obtained during a first time interval are 95 % or more similar to each other, the processor may determine that the reliability of the corresponding ID information is high.

When it is determined that the reliability of the ID information is low, the processor may perform preprocessing on the ID information about the other ship by using a third filter. Here, the third filter may determine, as a representative ID, the ID information that occupies the highest proportion of the stored ID information during a preset time.

As a further example, the processor may perform preprocessing on the first data by using a fourth filter configured to filter first data. Here, the fourth filter may determine the first data, based on a proportion of first data generated during a preset time.

For example, the classification grade of the other ship included in the first data may change continuously over time. Thus, the processor may determine a classification grade with the highest proportion from among classification grades generated for one other ship during a preset time. When the classification grade with the highest proportion is greater than or equal to a limit value, the processor may determine the classification grade with the highest proportion as a representative value. When the classification grade with the highest proportion is less than the limit value, the processor may determine the current classification grade as the representative value of the first data.

According to an embodiment, the first data may be generated by comprehensively using information obtained from sensors. In this case, information about the other ship may be determined by integrating information obtained through at least some of a camera, a radar, a lidar, and a sonar, and the above-described classification tables may not be used. The first data may be determined by assigning a classification grade to the corresponding other ship based on the determined information about the other ship.

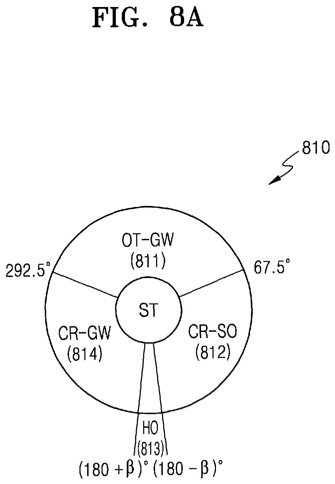

The processor may generate second data based on the preprocessed ship operation information about the other ship. The processor may further use the preprocessed first data to generate the second data. For example, the processor may generate the second data by generating a plurality of areas centered on the own ship and determining an encounter situation between the own ship and another ship by using ship operation information about other ships respectively located in the plurality of generated areas. Hereinafter, with reference to FIGS. 5 to 8F, a method, performed by a processor, of generating second data that is associated with a relationship between an own ship and another ship will be described.

FIG. 5 is a flowchart for describing an example of a method of determining an encounter situation between an own ship and another ship, that is, a method of generating second data, according to an embodiment. Hereinafter, a method, performed by a processor, of generating second data will be described with reference to FIG. 5.

Referring to FIG. 5, in operation 510, the processor may define a plurality of areas centered on an own ship. The processor may partition a 360-degree area centered on the own ship to define the plurality of areas. The plurality of areas may be defined based on information about the own ship. The information about the own ship may include ship operation information about the own ship.

For example, the plurality of areas may include a first area to a sixth area. Here, the size of the first area may be determined based on the surrounding environment of the own ship. For example, the processor may determine the size of the first area based on the number of objects detected in the vicinity of the own ship. For example, the processor may define the number of objects detected in the vicinity of the own ship based on first data about other ships. For example, the processor may also determine the size of the first area based on traffic complexity determined by using the first data about the other ships. According to an embodiment, the processor may calculate traffic complexity by using the first data about the other ships, or determine a traffic complexity level based on the number of other ships within a preset range and the first data about each other ship.

For example, the processor may determine the size of the first area to be proportional to the number of objects detected in the vicinity of the own ship. The size of each of the second area and the sixth area may be determined based on the size of the first area. The fourth area may be a fixed area. The fourth area may be an area specified in the International Regulations for Preventing Collisions at Sea (COLREG Rules) and may be a fixed area regardless of ship type, status, etc. The size of each of the third area and the fifth area may be determined based on the size of the fourth area. The third area and the fifth area may be areas partitioned by extension lines of the boundary lines defining the fourth area.

In operation 520, the processor may define relationships between the own ship and other ships according to the defined areas. The processor may define the relationships between the own ship and the other ships for the respective defined areas based on ship operation information about the other ships and ship operation information about the own ship. Here, the ship operation information about the own ship and the other ships may include information about heading angles and travel speeds of the other ships. A relationship between the own ship and another ship may include an encounter situation between the own ship and the other ship, and the status of the own ship.

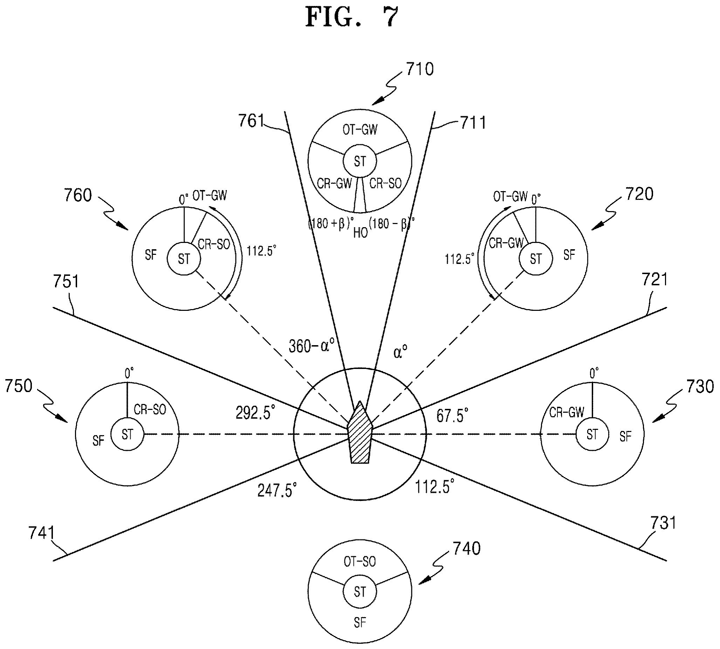

For example, the processor may determine the encounter situation between the own ship and the other ship and the status of the own ship, based on the information about the heading angle and the travel speed of the other ship. Here, the encounter situations may include a first encounter situation ('head-on') in which the own ship and the other ship face each other head-on, a second encounter situation ('crossing') in which the own ship and the other ship cross each other, and a third encounter situation ('overtaking') in which the own ship overtakes the other ship. The statuses of the own ship may include a first status ('give-way') in which the own ship is a give-way vessel, and a second status ('stand-on') in which the own ship is a stand-on vessel. Accordingly, the processor may define relationships with the other ships in all directions around the own ship. Relationships with other ships will be described below in more detail with reference to FIGS. 7 to 8F.

In operation 530, the processor may determine possibilities of collision between the own ship and the other ships, based on the ship operation information about the own ship and the ship operation information about the other ships. The processor may classify the other ships into cases where there is a possibility of collision and cases where there is no possibility of collision.

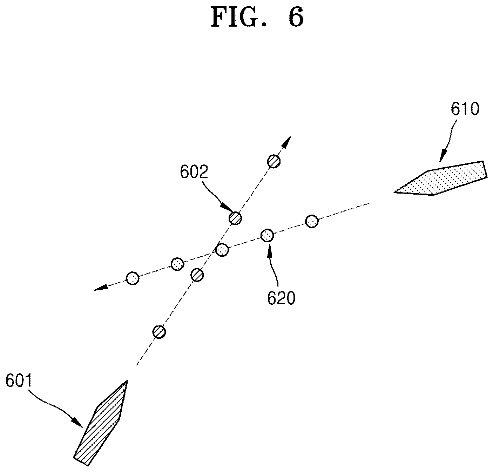

For example, the processor may generate collision possibility determination parameters based on position information and speed information about the own ship and another ship, which are included in the ship operation information about the own ship and the other ship, respectively, and determine a possibility of collision based on whether the collision possibility determination parameters satisfy a preset condition. Here, the collision possibility determination parameters may include a first parameter associated with time (time of closest point of approach (TCPA)), and a second parameter associated with distance (distance of closest point of approach (DCPA)). A collision possibility determination method will be described below in more detail with reference to FIG. 6.

In operation 540, the processor may determine an encounter situation with the other ship, based on the defined relationship with the other ship, and the possibility of collision with the other ship. The processor may output the determined encounter situation as second data.

When there is no possibility of collision, the processor may determine the encounter situation as a safe state ('safe') without exception. When there is a possibility of collision, the processor may determine the encounter situation, considering exceptions. For example, the processor may determine the encounter situation based on the defined relationship with the other ship and the ship operation information about the own ship and the other ship, and even when the encounter situation is determined as the safe state ('safe'), there is a possibility of collision, and thus, the processor may review whether to change the encounter situation.

Even when the encounter situation is determined as the safe state ('safe'), the processor may change the second data according to each area. For example, when another ship located in the second area has a possibility of collision but is determined as being in the safe state ('safe'), the processor may replace the second data with CR-GW or OT-GW. For example, when another ship located in the third area has a possibility of collision but is determined as being in the safe state, the processor may replace the second data with CR-GW. The changed encounter situation may be determined based on a preset table, but is not limited thereto.

As a further example, operation 320 and operation 330 of FIG. 3 may be continuously performed. For example, the processor may determine a risk of the own ship by using a risk determination criterion determined based on the derived relationship with the other ship, and determine whether the other ship is an avoidance target for the own ship, based on the determined risk of the own ship. For example, the processor may determine the risk determination criterion based on the derived relationship with the other ship and data associated with classification of the other ship, and determine the risk of the own ship based on whether the risk determination parameters of the own ship with respect to the other ship satisfy the determined risk determination criterion. Thus, the processor may help a navigator or an autonomous navigation system determine whether to avoid the other ship, by determining whether the other ship is an avoidance target, based on the determined risk of the own ship.

FIG. 6 is a diagram for describing an example of a method of determining a possibility of collision between an own ship and another ship, according to an embodiment. Hereinafter, a method, performed by a processor, of determining a possibility of collision between an own ship and another ship will be described with reference to FIG. 6.

Referring to FIG. 6, the processor may determine a possibility of collision between an own ship 601 and another ship 610. For example, the processor may determine the possibility of collision between the own ship 601 and the other ship 610, based on ship operation information about the own ship 601 and ship operation information about the other ship 610.

For example, the processor may generate collision possibility determination parameters based on the ship operation information about each of the own ship 601 and the other ship 610. The processor may generate the collision possibility determination parameters based on position information and speed information about each of the own ship 601 and the other ship 610. Here, the collision possibility determination parameters may include a first parameter associated with a time (TCPA), and a second parameter associated with a distance (DCPA).

For example, the processor may derive expected routes of the own ship 601 and the other ship 610 by using current position information and current speed information about the own ship 601 and the other ship 610. The processor may derive the expected routes from the current positions of the own ship 601 and the other ship 610, respectively, assuming that the speed of each of the own ship 601 and the other ship 610 is constant.

For example, the processor may calculate expected closest points of approach (CPAs) 602 and 620 of the own ship 601 and the other ship 610, respectively, as collision possibility determination parameters, by using the expected routes of the own ship 601 and the other ship 610. By using the expected routes of the own ship 601 and the other ship 610, the processor may calculate the expected CPAs 602 and 620, which are the points at which the own ship 601 and the other ship 610 are closest to each other, respectively, assuming that the own ship 601 and the other ship 610 maintain their current speeds.

The processor may calculate the first parameter associated with time and the second parameter associated with distance by using the expected CPAs 602 and 620. For example, the processor may calculate, as the first parameter, a TCPA, which is the time required for the own ship 601 and the other ship 610 to reach their respective expected CPAs 602 and 620. As another example, the processor may calculate, as the second parameter, a DCPA, which is the distance between the expected CPA 602 of the own ship 601 and the expected CPA 620 of the other ship 610.

The processor may determine the possibility of collision based on whether the generated collision possibility determination parameters satisfy a preset condition. The processor may determine the possibility of collision based on whether the first parameter and the second parameter included in the collision possibility determination parameters satisfy their respective preset conditions.

For example, when the first parameter is greater than 0, the processor may determine that the first parameter satisfies the preset condition. In detail, the first parameter is associated with time, and thus, when the first parameter is greater than 0, which mean that the expected CPAs 602 and 620 will occur in the future, the processor may determine that there is a possibility of collision. In addition, when the first parameter is less than 0, which mean that the expected CPAs 602 and 620 occurred in the past, the processor may determine that the possibility of collision is low.

As another example, when the second parameter is less than a safe distance, the processor may determine that the second parameter satisfies the preset condition. Here, the safe distance refers to a distance that the own ship 601 needs to maintain for safety, may be a distance preset by a navigator or an autonomous navigation system, and may be set to k times the length of the own ship 601 (where k is a natural number of 1 or greater), but is not limited thereto.

In detail, when the second parameter is less than the preset safe distance, which mean that the expected CPAs 602 and 620 are within the safe distance, the processor may determine that there is a possibility of collision. In addition, when the second parameter is greater than the preset safe distance, which mean that the expected CPAs 602 and 620 are outside the safe distance, the processor may determine that the possibility of collision is low.

When both the first parameter and the second parameter satisfy their respective preset conditions, the processor may determine that there is a possibility of collision. When both the first parameter and the second parameter satisfy their respective preset conditions, the processor may define the corresponding other ship as a hazardous object. The processor may output the possibility of collision as 'Yes' (or 1) or 'No' (or 0), but is not limited thereto, and according to an embodiment, may output a quantified value representing the possibility of collision.

FIG. 7 is a diagram for describing an example of a plurality of areas according to an embodiment. Hereinafter, a method, performed by a processor, of generating a plurality of areas will be described with reference to FIG. 7.

Referring to FIG. 7, the processor may define a plurality of areas 710, 720, 730, 740, 750, and 760 centered on the own ship. The processor may define the plurality of areas 710, 720, 730, 740, 750, and 760 by partitioning the area surrounding the own ship based on position information about the own ship. The processor may partition the area surrounding the own ship by using a plurality of direction angles determined around the current position of the own ship. The processor may determine, as the plurality of areas 710, 720, 730, 740, 750, and 760, areas between adjacent direction angles among the plurality of direction angles determined around the own ship.

For example, the processor may generate the first area 710 based on information about the surrounding environment where the own ship is located. In detail, the processor may determine the size of the first area 710 based on the number of objects detected in the surrounding environment where the own ship is located. The processor may obtain the surrounding environment information based on first data about other ships. The processor may define the number of objects detected in the vicinity of the own ship, by using the first data about the other ships. The processor may determine traffic complexity by using the first data about the other ships. According to an embodiment, the processor may calculate traffic complexity by using the first data about the other ships, or determine a traffic complexity level based on the number of other ships within a preset range and the first data about each other ship.

The processor may further consider the position of the own ship to generate the first area 710. For example, the processor may generate the first area 710 by determining its size according to whether the position of the own ship is in the open sea, a strait, a port, or an anchorage. For example, when the surrounding environment where the own ship is located has numerous detected objects, such as a port, the processor may determine the size of the first area 710 to be large. As another example, when the surrounding environment where the own ship is located has few detected objects, such as an oceanic area, the processor may determine the size of the first area 710 to be small. Thus, the processor may efficiently derive a relationship with another ships by differently determining the size of the first area 710 for each surrounding environment where the own ship is located.

The processor may determine a direction angle a° of the first area 710 based on the surrounding environment of the own ship. For example, the processor may determine the direction angle $\alpha$° to both sides of the center, which is the direction of travel of the own ship. That is, in a ship-fixed coordinate system in which the bow direction of the own ship is always fixed at 0°, the processor may determine the direction angle $\alpha$° to both sides with respect to the bow direction of the own ship. Thus, the processor may determine, as the first area 710, the area between a line segment 711 representing the direction angle $\alpha$°, and a line segment 761 representing the direction angle (360 - $\alpha$)°.

The processor may determine the sizes of the second area 720 and the sixth area 760, based on the size of the first area 710. The second area 720 and the sixth area 760 may be variable areas determined by the direction angles that define the first area 710. In detail, the processor may determine the sizes of the second area 720 and the sixth area 760 according to the size of the first area 710, which changes based on information about the surrounding environment where the own ship is located, and the size of the fourth area 740, which is defined by the International Regulations for Preventing Collisions at Sea (COLREG Rules). Line segments 731 and 741 are line segments reflecting the definitions for the relationship between an overtaking vessel and a vessel being overtaken in the International Regulations for Preventing Collisions at Sea (COLREG Rules), and line segments 721 and 751 may be line segments extending from the line segments 731 and 741, respectively.

For example, the line segment 721 representing a direction angle of 67.5° is an extension of the line segment 741 representing a direction angle of 247.5°, and the line segment 751 representing a direction angle of 292.5° may be an extension of the line segment 731 representing a direction angle of 112.5°. The direction angles 112.5° and 247.5° may be values described in the International Regulations for Preventing Collisions at Sea (COLREG Rules) to explain the relationship between an overtaking vessel and a vessel being overtaken.

The processor may determine the sizes of the third area 730 and the fifth area 750, based on the size of the fourth area 740. The fourth area 740 is a fixed area determined based on the International Regulations for Preventing Collisions at Sea (COLREG Rules), the third area 730 and the fifth area 750 are areas determined by the direction angles that define the fourth area 740, and thus, the third area 730 and the fifth area 750 may also be fixed areas.

For example, the line segment 721 representing a direction angle of 67.5°, the line segment 731 representing a direction angle of 112.5°, the line segment 741 representing a direction angle of 247.5°, and the line segment 751 representing a direction angle of 292.5° may be fixed values, and the line segment 711 representing the direction angle $\alpha$° and the line segment 761 representing the direction angle (360 - $\alpha$)° may be values that change according to the surrounding environment of the own ship.

For example, the processor may determine, as the first area 710, the area between the line segment 711 representing the direction angle $\alpha$° and the line segment 761 representing the direction angle (360 - $\alpha$)°, determine, as the

second area 720, the area between the line segment 711 representing the direction angle $\alpha$° and the line segment 721 representing a direction angle of 67.5°, determine, as the third area 730, the area between the line segment 721 representing a direction angle of 67.5° and the line segment 731 representing a direction angle of 112.5°, determine, as the fourth area 740, the area between the line segment 731 representing a direction angle of 112.5° and the line segment 741 representing a direction angle of 247.5°, determine, as the fifth area 750, the area between the line segment 741 representing a direction angle of 247.5° and the line segment 751 representing a direction angle of 292.5°, and determine, as the sixth area 760, the area between the line segment 751 representing a direction angle of 292.5° and the line segment 761 representing the direction angle (360 - $\alpha$)°.

FIGS. 8A to 8F are diagrams for describing a method of deriving a relationship between an own ship and another ship in each of a plurality of areas, according to an embodiment. Hereinafter, a method, performed by a processor, of deriving a relationship between an own ship and another ship in each of a plurality of areas will be described with reference to FIGS. 8A to 8F.

The processor may derive a relationship between the own ship and another ship based on ship operation information about other ships that are located in at least one of a plurality of defined areas, and ship operation information about the own ship. Here, the ship operation information about the other ships may include information about heading angles and travel speeds of the other ships. For example, the processor may determine an encounter situation between the own ship and another ship and the status of the own ship, based on information about a heading angle and a travel speed of the other ship.

For example, the processor may calculate a relative movement direction, that is, a relative COG, by using the heading angle or travel speed of each of the own ship and the other ship, and the calculated relative COG may be expressed as a direction angle. Thus, the processor may determine an encounter situation between the own ship and the other ship, and the status of the own ship based on a range within which the calculated relative COG falls.

For example, the encounter situations may include a first encounter situation in which the own ship and the other ship face each other head-on, a second encounter situation in which the own ship and the other ship cross each other, and a third encounter situation in which the own ship overtakes the other ship. In the drawings, the first encounter situation may be indicated as HO (head-on), the second encounter situation may be indicated as CR (crossing), and the third encounter situation may be indicated as OT (overtaking).

As a further example, the encounter situations may include a fourth encounter situation in which there is no possibility that the own ship and the other ship will encounter each other, and a fifth encounter situation in which the speed of the other ship is lower than the speed of the own ship, and the fourth encounter situation may be indicated as SF (safe) and the fifth encounter situation may be indicated as ST (stationary). For example, when a relative velocity vector between the own ship and the other ship is directed toward a point behind the stern of the own ship, the processor may determine the encounter situation as the fourth encounter situation in which the own ship and the other ship cannot encounter each other. The fifth encounter situation may refer to a situation in which the speed of the other ship may be regarded as 0 because the speed of the own ship is higher than that of the other ship.

In addition, the statuses of the own ship may include a first status in which the own ship is a give-way vessel, and a second status in which the own ship is a stand-on vessel. In the drawings, the first status may be indicated as GW (give-way), and the second status may be indicated as SO (stand-on).

Referring to FIG. 8A, the processor may determine an encounter situation between the own ship and another ship that is present in a first area 810, and the status of the own ship.

For example, when a relative COG between the own ship and the other ship falls within a 1-1st range 811, the processor may determine that the own ship and the other ship are in the third encounter situation (overtaking) and the status of the own ship is the first status (give-way). The 1-1st range 811 may have the same direction angles as an OT-SO area included in the fourth area 740 (see FIG. 7). For example, the 1-1st range 811 may include values determined by regulations. The 1-1st range may include a range of direction angles from 292.5° to 67.5°, but is not limited thereto. In other words, the processor may determine, as OT-GW, the encounter situation between the own ship and the other ship and the status of the own ship.

For example, when the relative COG between the own ship and the other ship falls within a 1-2nd range 812, the processor may determine that the own ship and the other ship are in the second encounter situation (crossing) and the status of the own ship is the second status (stand-on). The 1-2nd range 812 may have the same direction angles as a CR-GW area included in the second area 720 (see FIG. 7). For example, the 1-2nd range 812 may include values determined by a relative COG value between the own ship and the other ship. The 1-2nd range 812 may include a range of direction angles from 67.5° to (180 - $\beta$)°, but is not limited thereto. In other words, the processor may determine, as CR-SO, the encounter situation between the own ship and the other ship and the status of the own ship. Here, $\beta$ may denote a relative COG between the own ship and the other ship, and may be a value that changes according to the states of the own ship and the other ship.

For example, when the relative COG between the own ship and the other ship falls within a 1-3rd range 813, the processor may determine that the own ship and the other ship are in the first encounter situation (head-on). For example, the 1-3rd range 813 may include values determined by a relative COG value between the own ship and the other ship. The 1-3rd range 813 may include a range of direction angles from (180 - $\beta$)° to (180 + $\beta$)°, but is not limited thereto. In other words, the processor may determine, as HO, the encounter situation between the own ship and the other ship. In addition, when the own ship and the other ship are in the first encounter situation, the processor may continuously determine the possibility of collision between the own ship and the other ship until they are in the fourth encounter situation, where it is determined that there is no possibility of collision. In addition, as described above, $\beta$ may denote a relative COG between the own ship and the other ship, and when the relative COG between the own ship and the other ship falls within the 1-3rd range 813, the processor may determine, as HO, the encounter situation between the own ship and the other ship.

For example, when the relative COG between the own ship and the other ship falls within a 1-4th range 814, the processor may determine that the own ship and the other ship are in the second encounter situation (crossing) and the status of the own ship is the first status (give-way). The 1-4th range 814 may have the same direction angles as a CR-SO area included in the sixth area 760 (see FIG. 7). For example, the 1-4th range 814 may include values determined by a relative COG value between the own ship and the other ship. The 1-4th range 814 may include a range of direction angles from (180 + $\beta$)° to 292.5°, but is not limited thereto. In other words, the processor may determine, as CR-GW, the encounter situation between the own ship and the other ship and the status of the own ship.

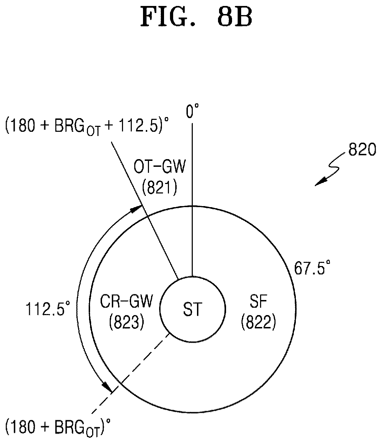

Referring to FIG. 8B, the processor may determine an encounter situation between the own ship and another ship that is present in a second area 820, and the status of the own ship.

For example, when the relative COG between the own ship and the other ship falls within a 2-1st range 821, the processor may determine that the own ship and the other ship are in the third encounter situation (crossing) and the status of the own ship is the first status (give-way). The 2-1st range 821 may have the same direction angles as an OT-GW area included in the sixth area 760 (see FIG. 7). For example, the 2-1st range 821 may include values determined by a relative direction angle between the own ship and the other ship. The 2-1st range 821 may include a range of direction angles from (180 + $BRG_{OT}$ + 112.5)° to 0°, but is not limited thereto. Here, $BRG_{OT}$ may denote a relative direction angle between the own ship and the other ship. In other words, the processor may determine, as OT-GW, the encounter situation between the own ship and the other ship and the status of the own ship.

For example, when the relative COG between the own ship and the other ship falls within a 2-2nd range 822, the processor may determine that the own ship and the other ship are in the fourth encounter situation (safe). The 2-2nd range 822 may have the same direction angles as an SF area of the sixth area (see FIG. 7). For example, the 2-2nd range 822 may include values determined by a relative direction angle between the own ship and the other ship. The 2-2nd range 822 may include a range of direction angles from 0° to (180 + $BRG_{OT}$)°, but is not limited thereto. In other words, the processor may determine, as SF, the encounter situation between the own ship and the other ship.

For example, when the relative COG between the own ship and the other ship falls within a 2-3rd range 823, the processor may determine that the own ship and the other ship are in the second encounter situation (crossing) and the status of the own ship is the first status (give-way). The 2-3rd range 823 may have the same direction angles as the CR-SO area included in the sixth area 760 (see FIG. 7). For example, the 2-3rd range 823 may include values determined by a relative direction angle between the own ship and the other ship. The 2-3rd range 823 may include a range of direction angles from (180 + $BRG_{OT}$)° to (180 + $BRG_{OT}$ + 112.5)°, but is not limited thereto. In other words, the processor may determine, as CR-GW, the encounter situation between the own ship and the other ship and the status of the own ship.

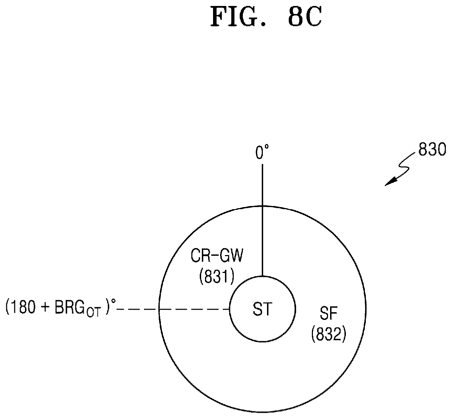

Referring to FIG. 8C, the processor may determine an encounter situation between the own ship and another ship that is present in a third area 830, and the status of the own ship.

For example, when the relative COG between the own ship and the other ship falls within a 3-1st range 831, the processor may determine that the own ship and the other ship are in the second encounter situation (crossing) and the status of the own ship is the first status (give-way). The 3-1st range 831 may have the same direction angles as a CR-SO area included in the fifth area 750 (see FIG. 7). For example, the 3-1st range 831 may include values determined by a relative direction angle between the own ship and the other ship. The 3-1st range 831 may include a range of direction angles from (180 + $BRG_{OT}$)° to 0°, but is not limited thereto. In other words, the processor may determine, as CR-GW, the encounter situation between the own ship and the other ship and the status of the own ship.

For example, when the relative COG between the own ship and the other ship falls within a 3-2nd range 832, the processor may determine that the own ship and the other ship are in the fourth encounter situation (safe). The 3-2nd range 832 may have the same direction angles as an SF area included in the fifth area 750 (see FIG. 7). For example, the 3-2nd range 832 may include values determined by a relative direction angle between the own ship and the other ship. The 3-2nd range 832 may include a range of direction angles from 0° to (180 + $BRG_{OT}$)°, but is not limited thereto. In other words, the processor may determine, as SF, the encounter situation between the own ship and the other ship.

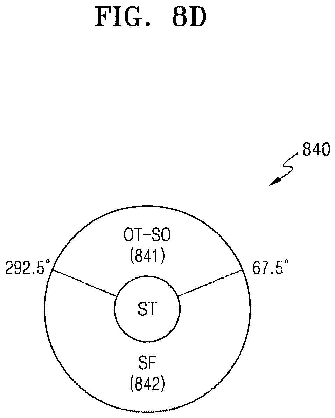

Referring to FIG. 8D, the processor may determine an encounter situation between the own ship and another ship that is present in a fourth area 840, and the status of the own ship.

For example, when the relative COG between the own ship and the other ship falls within a 4-1st range 841, the processor may determine that the own ship and the other ship are in the third encounter situation (overtaking) and the status of the own ship is the second status (stand-on). The 4-1st range 841 may have the same direction angles as an OT-GW area included in the first area 710 (see FIG. 7). For example, the 4-1st range 841 may include values determined by regulations. The 4-1st range 841 may include a range of direction angles from 292.5° to 67.5°, but is not limited thereto. In other words, the processor may determine, as OT-SO, the encounter situation between the own ship and the other ship and the status of the own ship.

For example, when the relative COG between the own ship and the other ship falls within a 4-2nd range 842, the processor may determine that the own ship and the other ship are in the fourth encounter situation. For example, the 4-2nd range 842 may include values determined by regulations. The 4-2nd range 842 may include a range of direction angles from 67.5° to 292.5°, but is not limited thereto. In other words, the processor may determine, as SF, the encounter situation between the own ship and the other ship.

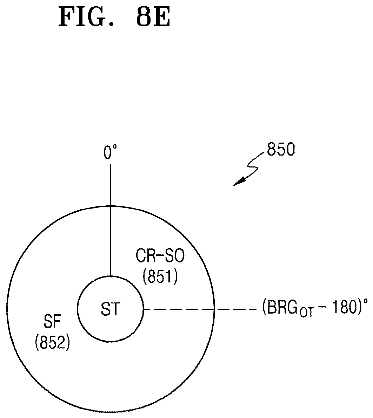

Referring to FIG. 8E, the processor may determine an encounter situation between the own ship and another ship that is present in a fifth area 850, and the status of the own ship.

For example, when the relative COG between the own ship and the other ship falls within a 5-1st range 851, the processor may determine that the own ship and the other ship are in the second encounter situation (crossing) and the status of the own ship is the second status (stand-on). The 5-1st range 851 may have the same direction angles as a CR-GW area included in the third area 730 (see FIG. 7). For example, the 5-1st range 851 may include values determined by a relative direction angle between the own ship and the other ship. The 5-1st range 851 may include a range of direction angles from 0° to ($BRG_{OT}$ - 180)°, but is not limited thereto. In other words, the processor may determine, as CR-SO, the encounter situation between the own ship and the other ship and the status of the own ship.

For example, when the relative COG between the own ship and the other ship falls within a 5-2nd range 852, the processor may determine that the own ship and the other ship are in the fourth encounter situation (safe). The 5-2nd range 852 may have the same direction angles as an SF area included in the third area 730 (see FIG. 7). For example, the 5-2nd range 852 may include values determined by a relative direction angle between the own ship and the other ship. The 5-2nd range 852 may include a range of direction angles from ($BRG_{OT}$ - 180)° to 0°, but is not limited thereto. In other words, the processor may determine, as SF, the encounter situation between the own ship and the other ship.

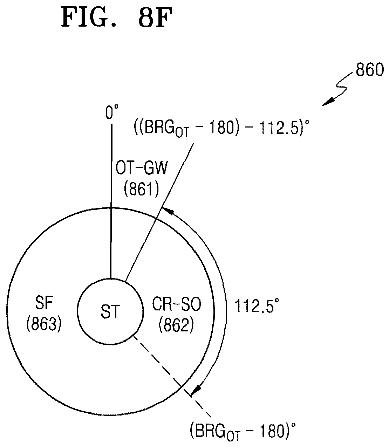

Referring to FIG. 8F, the processor may determine an encounter situation between the own ship and another ship that is present in a sixth area 860, and the status of the own ship.

For example, when a relative COG between the own ship and the other ship falls within a 6-1st range 861, the processor may determine that the own ship and the other ship are in the third encounter situation (overtaking) and the status of the own ship is the first status (give-way). The 6-1st range 861 may have the same direction angles as an OT-GW area included in the second area 720 (see FIG. 7). For example, the 6-1st range 861 may include values determined by a relative direction angle between the own ship and the other ship. The 6-1st range 861 may include a range of direction angles from 0° to (($BRG_{OT}$ - 180) - 112.5)°, but is not limited thereto. In other words, the processor may determine, as OT-GW, the encounter situation between the own ship and the other ship and the status of the own ship.

For example, when the relative COG between the own ship and the other ship falls within a 6-2nd range 862, the processor may determine that the own ship and the other ship are in the second encounter situation (crossing) and the status of the own ship is the second status (stand-on). The 6-2nd range 862 may have the same direction angles as the CR-GW area included in the second area 720 (see FIG. 7). For example, the 6-2nd range 862 may include values determined by a relative direction angle between the own ship and the other ship. The 6-2nd range 862 may include a range of direction angles from (($BRG_{OT}$ - 180) - 112.5)° to ($BRG_{OT}$ - 180)°, but is not limited thereto. In other words, the processor may determine, as CR-SO, the encounter situation between the own ship and the other ship and the status of the own ship.

For example, when the relative COG between the own ship and the other ship falls within a 6-3rd range 863, the processor may determine that the own ship and the other ship are in the fourth encounter situation (safe). The 6-3rd range 863 may have the same direction angles as an SF area included in the second area 720 (see FIG. 7). For example, the 6-3rd range 863 may include values determined by a relative direction angle between the own ship and the other ship. The 6-3rd range 863 may include a range of direction angles from ($BRG_{OT}$ - 180)° to 0°, but is not limited thereto. In other words, the processor may determine, as SF, the encounter situation between the own ship and the other ship.

Thus, the processor may generate second data by using the method described above with reference to FIGS. 5 to 8F.

In addition, the processor may determine whether the other ship is an avoidance target, based on the first data and the second data.

For example, the processor may determine a risk of the own ship by using a risk determination criterion determined based on the derived relationship, and determine whether the other ship is an avoidance target for the own ship, based on the determined risk of the own ship.

For example, the processor may determine a risk determination criterion based on the first data and the second data.

For example, the processor may determine the risk determination criterion based on the first data, the second data, and prestored tables. Here, the prestored tables may include a first table corresponding to the first data and a second table corresponding to the second data.

For example, the processor may generate a first sub-criterion based on the first data and the first table, generate a second sub-criterion based on the second data and the second table, and determine, as the risk determination criterion, any one of the first sub-criterion and the second sub-criterion, based on a preset rule. Here, the preset rule may include a rule that, when the status of the own ship is the first status, determines the first sub-criterion as the risk determination criterion.

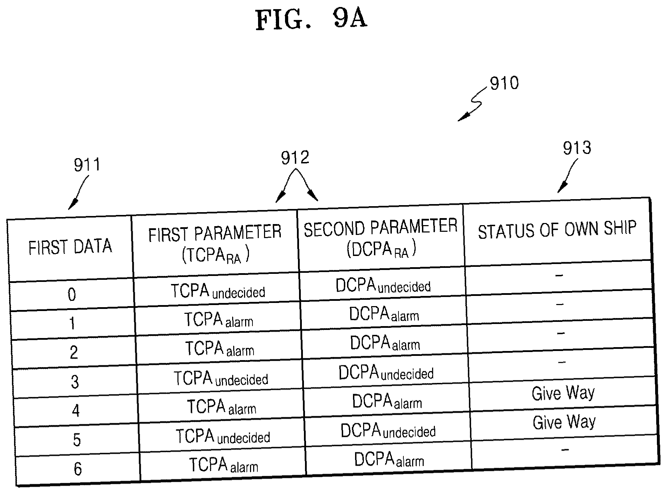

FIG. 9A is a diagram for describing an example of a method of generating a first sub-criterion based on a first table, according to an embodiment, and FIG. 9B is a diagram for describing an example of a method of generating a second sub-criterion based on a second table, according to an embodiment.

Hereinafter, a method, performed by a processor, of determining a risk determination criterion will be described with reference to FIGS. 9A and 9B.

First, referring to FIG. 9A, the processor may generate first sub-criteria 912 according to first data 911. The first table 910 may be a table for determining the first sub-criteria 912 corresponding to the first data 911. The first sub-criteria 912 may include two criteria for first and second parameters, respectively, but are not limited thereto. For example, the first sub-criteria 912 may include alarm criteria and hold criteria for the first and second parameters, respectively. The processor may determine the first sub-criteria 912 based on a first table 910.

For example, the first table 910 may be a table in which the first sub-criteria 912 corresponding to each first data 911, which is determined as a classification grade of 0 to 6, are defined. For example, when the first data 911 is a grade of 0, 3, or 5, the processor may determine the first sub-criteria 912 as hold criteria ($TCPA_{undecided}$ and $DCPA_{undecided}$). As another example, when the first data 911 is a grade of 1, 2, 4, or 6, the processor may determine the first sub-criteria 912 as alarm criteria ($TCPA_{\mathrm{alarm}}$ and $DCPA_{\mathrm{alarm}}$).

In addition, the processor may determine a status 913 of the own ship based on the first data 911. The processor may determine whether the status 913 of the own ship is the first status or the second status, based on the first data 911. Here, the first status may mean that the status of the own ship is a give-way vessel ('Give Way'), and the second status may mean that the status of the own ship is a stand-on vessel ('Stand On'). For example, only when the first data 911 is grade 4 or 5, the processor may determine the status 913 of the own ship as the first status ('Give Way'). When the first data 911 is not grade 4 or 5, the processor may determine the status of the own ship by using a second table 920 instead of the first table 910.

Referring to FIG. 9B, the processor may generate second sub-criteria 922 according to second data 921. The second table 920 may be a table for determining the second sub-criteria 922 corresponding to the second data 921. The second sub-criteria 922 may include two criteria for first and second parameters, respectively, but are not limited thereto. For example, the second sub-criteria 922 may include alarm criteria and warning criteria for the first and second parameters, respectively. The processor may determine the second sub-criteria 922 based on the second table 920.

For example, when the second data 921 is HO, CR-GW, OT-GW, or ST, the processor may determine the second sub-criteria 922 as warning criteria ($TCPA_{\mathrm{warning}}$ and $DCPA_{\mathrm{warning}}$). As another example, when the second data 921 is CR-SO or OT-SO, the processor may determine the second sub-criteria 922 as alarm criteria ($TCPA_{\mathrm{alarm}}$ and $DCPA_{\mathrm{alarm}}$). The alarm criteria ($TCPA_{\mathrm{alarm}}$ and $DCPA_{\mathrm{alarm}}$) of the second sub-criteria 922 may be the same as the alarm criteria ($TCPA_{\mathrm{alarm}}$ and $DCPA_{\mathrm{alarm}}$) of the first sub-criteria 912.

In addition, the processor may determine a status 923 of the own ship based on the second data 921. The processor may determine whether the status 923 of the own ship is the first status or the second status, based on the second data 921. For example, only when the second data 921 is HO, CR-GW, OT-GW, or ST, the processor may assign the status 923 of the own ship as the first status ('Give Way'). When the second data is SF, the processor may not assign the status 923 of the own ship.

The processor may determine, as risk determination criteria, the first sub-criteria or the second sub-criteria, based on a preset rule. Here, the preset rule may be a rule configured to determine the risk determination criteria based on a result of comparing the first sub-criteria 912 with the second sub-criteria 922.

For example, the preset rule may include a rule that, when the statuses 913 and 923 of the own ship are the first status ('Give Way'), determines the first sub-criteria 912 as the risk determination criteria. For example, when the first sub-criteria 912 are the hold criteria ($TCPA_{undecided}$ and $DCPA_{undecided}$), the processor may determine the second sub-criteria 922 as the risk determination criteria.

For example, when the first data 911 is grade 0 and the second data 921 is CR-GW, the processor may determine the warning criteria ($TCPA_{\mathrm{warning}}$ and $DCPA_{\mathrm{warning}}$), which are the second sub-criteria 922, as the risk determination criteria. However, when the status 913 of the own ship is the first status, that is, 'Give Way', the processor may always determine the first sub-criteria 912 as the risk determination criteria.

As another example, when the first sub-criteria 912 are the alarm criteria ($TCPA_{\mathrm{alarm}}$ and $DCPA_{\mathrm{alarm}}$), the processor may determine the first sub-criteria 912 as the risk determination criteria. For example, when the first data 911 is grade 2 and the second data 921 is CR-GW, the processor may determine the alarm criteria ($TCPA_{\mathrm{alarm}}$ and $DCPA_{\mathrm{alarm}}$), which are the first sub-criteria 912, as the risk determination criteria.

In addition, the hold criteria of the first sub-criteria 912 refer to states in which the criteria are not determined, and when the first sub-criteria 912 are the hold criteria, the risk may be determined by using the second sub-criteria 922. The warning criteria may refer to states requiring caution, and the alarm criteria may refer to dangerous states. Detailed values of the sub-criteria may be defined by a user. For example, the alarm criteria may include value less than those of the warning criteria. For example, the alarm criteria and the warning criteria may include values less than those of the hold criteria.

When the risk determination criteria are determined as the warning criteria ($TCPA_{warning}$ and $DCPA_{warning}$), and the risk determination parameters satisfy the risk determination criteria, the processor, a navigator, or an autonomous navigation system may determine that the own ship is currently in a state requiring caution. In addition, when the risk determination criteria are determined as the alarm criteria ($TCPA_{alarm}$ and $DCPA_{alarm}$), and the risk determination parameters satisfy the risk determination criteria, the processor, the navigator, or the autonomous navigation system may determine that the own ship is currently in a dangerous state. The risk determination parameters may be the parameters described above with reference to FIG. 6. Accordingly, the processor may determine a risk of the own ship by determining whether the risk determination parameters satisfy the determined risk determination criteria. Hereinafter, a risk determination method will be described in more detail.

FIGS. 10A and 10B are diagrams for describing an example of a method of determining a risk of a ship, according to an embodiment. Hereinafter, a method, performed by a processor, of determining a risk of a ship will be described with reference to FIGS. 10A and 10B.

First, referring to FIG. 10A, the processor may determine whether the risk determination parameters satisfy the determined risk determination criteria. The processor may determine whether a calculated first risk determination parameter and second risk determination parameter satisfy the risk determination criteria (e.g., the alarm criteria ($TCPA_{alarm}$ and $DCPA_{alarm}$)), and when both the first risk determination parameter and the second risk determination parameter satisfy the risk determination criteria, determine the risk of the own ship. When the risk determination parameters are less than or equal to the risk determination criteria, the processor may determine that the risk determination criteria are satisfied.

For example, when the risk determination criteria are determined as the alarm criteria ($TCPA_{alarm}$ and $DCPA_{alarm}$), the processor may determine whether both the first risk determination parameter and the second risk determination parameter are included in an alarm area 1010. When both the first risk determination parameter and the second risk determination parameter are included in the alarm area 1010, the processor may determine that the own ship is in a dangerous state.

As another example, when at least one of the first risk determination parameter and the second risk determination parameter is not included in the alarm area 1010, the processor may determine that the own ship is in a safe state. When at least one of the first risk determination parameter and the second risk determination parameter is included in a safe area 1030, the processor may determine that the own ship is in a safe state.

Referring to FIG. 10B, the processor may determine whether the risk determination parameters satisfy the determined risk determination criteria (e.g., the warning criteria ($TCPA_{warning}$ and $DCPA_{warning}$)). When the risk determination parameters all satisfy the risk determination criteria, the processor may determine the risk of the own ship. When the risk determination parameters are less than or equal to the risk determination criteria, the processor may determine that the risk determination criteria are satisfied.

For example, when the risk determination criteria are determined as the warning criteria ($TCPA_{warning}$ and $DCPA_{warning}$ ), the processor may determine whether both the first risk determination parameter and the second risk determination parameter are included in a warning area 1020. When both the first risk determination parameter and the second risk determination parameter are included in the warning area 1020, the processor may determine that the own ship is in a state requiring caution.

As another example, when at least one of the first risk determination parameter and the second risk determination parameter is not included in the warning area 1020, the processor may determine that the own ship is in a safe state. When at least one of the first risk determination parameter and the second risk determination parameter is included in a safe area 1030, the processor may determine that the own ship is in a safe state.

In addition, a method, performed by the processor, of determining whether the first risk determination parameter and the second risk determination parameter satisfy the risk determination criteria may be expressed by the following equations.

[Equation 1]

$$0 \leq First\ risk\ determination\ parameter \leq TCPA_{alarm}$$

[Equation 2]

$$0 \leq Second\ risk\ determination\ parameter \leq DCPA_{\mathrm{alarm}}$$

[Equation 3]

$$0 \leq First\ risk\ determination\ parameter \leq TCPA_{\mathrm{warning}}$$

[Equation 4]

$$0 \leq Second\ risk\ determination\ parameter \leq DCPA_{\mathrm{warning}}$$

For example, when the risk determination criteria are determined as the alarm criteria ($TCPA_{\mathrm{alarm}}$ and $DCPA_{\mathrm{alarm}}$), the processor may determine the risk of the own ship by using Equation 1 and Equation 2 above. As another example, when the risk determination criteria are determined as the warning criteria ($TCPA_{warning}$ and $DCPA_{\mathrm{warning}}$), the processor may determine the risk of the own ship by using Equation 3 and Equation 4 above.

In addition, the values of the alarm criteria ($TCPA_{\mathrm{alarm}}$ and $DCPA_{\mathrm{alarm}}$) or the warning criteria ($TCPA_{\mathrm{warning}}$ and $DCPA_{\mathrm{warning}}$), which are the risk determination criteria, may be determined based on the first data and the second data. However, the present disclosure is not limited thereto, and the values of the alarm criteria ($TCPA_{\mathrm{alarm}}$ and $DCPA_{\mathrm{alarm}}$) or the warning criteria ($TCPA_{\mathrm{warning}}$ and $DCPA_{\mathrm{warning}}$), which are the risk determination criteria, may always be fixed to preset values, without considering the situation of the own ship and the other ship.

The processor may determine whether the other ship is an avoidance target, based on the determined risk of the own ship. For example, when both the first risk determination parameter and the second risk determination parameter are included in any one of the alarm area 1010 or the warning area 1020, and the own ship is in any one of a dangerous state or a state requiring caution, the processor may determine that the other ship is an avoidance target. In addition, when at least one of the first risk determination parameter and the second risk determination parameter is included in the safe area 1030, and the own ship is in a safe state, the processor may determine that the other ship is not an avoidance target.

The processor may automatically control the own ship based on information about the determined risk of the own ship. For example, when the other ship is determined as an avoidance target, the processor may automatically control the navigation of the own ship to avoid the other ship. In this case, the processor may perform at least one of resetting the navigation route, generating an avoidance route, changing the speed of the own ship, and transmitting a message to the other ship. The processor may generate a control command for controlling the own ship based on the information about the determined risk of the own ship. The control command may include at least one of a navigation route resetting command, an avoidance route generation command, an own-ship speed change command, and a message transmission command.

The processor may display the determined risk to the user. The processor may provide convenience by displaying a determined state of the own ship to the user through a display device such that the user may intuitively recognize the state of the own ship. For example, the processor may display the state of the own ship to the user by using different forms such as a sound, a color, a pattern, or a pop-up, depending on the safe, alarm, or warning state.

Therefore, by performing the above-described method, the processor may determine a risk of the own ship according to a relationship between the own ship and another ships and the type of the other ship, thereby improving the stability of the navigation of the ship. In addition, by calculating a collision avoidance strategy only for another ship that the own ship needs to avoid, computing resources may be saved.

Meanwhile, the above-described method may be written as a computer-executable program, and may be implemented in a general-purpose digital computer that executes the program by using a computer-readable recording medium. In addition, the structure of the data used in the above-described method may be recorded in a computer-readable recording medium through various units. The computer-readable recording medium includes a storage medium, such as a magnetic storage medium (e.g., ROM, RAM, a universal serial bus (USB) drive, a floppy disk, or a hard disk) and an optically readable medium (e.g., a CD-ROM or a digital video disc (DVD)).

It will be understood by those of skill in the art that the present disclosure may be implemented in a modified form without departing from the intrinsic characteristics of the descriptions provided above. Therefore, the disclosed methods should be considered in an illustrative rather than a restrictive sense, and the scope of the present disclosure should be defined by claims rather than the foregoing description, and should be construed to include all differences within the scope equivalent thereto.

## Claims

1. A device for determining a risk of a ship, the device comprising:

   a memory storing at least one program;
   a display unit; and
   at least one processor configured to execute the at least one program,
   wherein the at least one processor is further configured to generate first data and second data by using obtained information about another ship, determine a risk of an own ship based on whether risk determination parameters satisfy risk determination criteria that are determined based on the first data and the second data, and generate a navigation control command for the own ship, based on the determined risk of the own ship.

2. The device of claim 1, wherein the at least one processor is further configured to generate the first data based on at least one of a prestored first classification table associated with ship type information about the other ship, and a prestored second classification table associated with navigation status information about the other ship.

3. The device of claim 2, wherein the at least one processor is further configured to determine a first classification grade corresponding to the ship type information about the other ship, based on the prestored first classification table, determine a second classification grade corresponding to the navigation status information about the other ship, based on the prestored second classification table, and generate the first data based on the first classification grade and the second classification grade.

4. The device of claim 1, wherein the at least one processor is further configured to generate the second data comprising an encounter situation between the own ship and the other ship, and a status of the own ship, based on ship operation information about the other ship that is included in the information about the other ship.

5. The device of claim 4, wherein the at least one processor is further configured to generate a plurality of areas centered on a position of the own ship, and determine the encounter situation between the own ship and the other ship, based on the ship operation information about the own ship that is located in any one of the plurality of generated areas.

6. The device of claim 1, wherein the at least one processor is further configured to determine the risk determination criteria based on the first data, the second data, and prestored tables, and
   the prestored tables comprise a first table corresponding to the first data and a second table corresponding to the second data.

7. The device of claim 1, wherein the at least one processor is further configured to determine, as the risk determination criteria, any one a first sub-criterion based on the first data and a second sub-criterion based on the second data.

8. The device of claim 1, wherein the risk determination parameters comprise a first risk determination parameter associated with a time, and a second risk determination parameter associated with a distance, which are calculated based on ship operation information about the own ship and ship operation information about the other ship.

9. The device of claim 8, wherein the at least one processor is further configured to, based on both the first risk determination parameter and the second risk determination parameter being less than or equal to the risk determination criteria, determine that the risk determination criteria are satisfied.

10. A device for determining an encounter situation between an own ship and another ship, the device comprising:

    a memory storing at least one program;
    a display unit; and
    at least one processor configured to execute the at least one program,
    wherein the at least one processor is further configured to generate a plurality of areas around an own ship, which are centered on the own ship, derive a relationship between the own ship and another ship that is located in at least one of the plurality of generated areas, based on ship operation information about the other ship and ship operation information about the own ship, determine a possibility of collision between the own ship and the other ship based on the ship operation information about the own ship and the ship operation information about the other ship, and determine an encounter situation between the own ship and the other ship based on a result of the determining of the possibility of collision.

**11.** The device of claim 10, wherein the at least one processor is further configured to generate collision possibility determination parameters based on position information and speed information about each of the own ship and the other ship, which are included in the ship operation information about the own ship and the ship operation information about the other ship, and determine the possibility of collision based on whether the collision possibility determination parameters satisfy preset conditions.

**12.** The device of claim 10, wherein the plurality of areas comprise a first area, and
a size of the first area is determined based on surrounding environment information about the own ship.

**13.** The device of claim 10, wherein the ship operation information about the other ship comprises a heading angle of the other ship and travel speed information about the other ship, and
the at least one processor is further configured to determine the encounter situation between the own ship and the other ship, and the status of the own ship, based on the heading angle of the other ship and the travel speed information about the other ship.

**14.** The device of claim 13, wherein the encounter situation comprises a first encounter situation in which the own ship and the other ship face each other head-on, a second encounter situation in which the own ship and the other ship cross each other, and a third encounter situation in which the own ship overtakes the other ship, and
the status of the own ship comprises a first status in which the own ship is a give-way vessel, and a second status in which the own ship is a stand-on vessel.

**15.** The device of claim 10, wherein the at least one processor is further configured to determine a risk of the own ship by using risk determination criteria that are determined based on the derived relationship, and determine whether the other ship is an avoidance target for the own ship, based on the determined risk of the own ship.

FIG. 1

10
1

FIG. 2

200
DEVICE
210
COMMUNICATION UNIT
220
PROCESSOR
230
MEMORY

FIG. 2

START
GENERATE FIRST DATA AND SECOND DATA BY USING INFORMATION ABOUT ANOTHER SHIP THAT IS CONTINUOUSLY OBTAINED
310
DETERMINE RISK DETERMINATION CRITERION BASED ON FIRST DATA AND SECOND DATA
320
DETERMINE RISK OF OWN SHIP BASED ON WHETHER
330
END

# FIG. 4A

401

| SHIP TYPE INFORMATION (410) | FIRST CLASSIFICATION GRADE (420) |
|---|---|
| Navigation status: Restricted manoeuvrability | 5 |
| Navigation status: Engaged in Fishing | 1 |
| Fishing | 1 |
| Towing | 2 |
| Towing: length exceeds 200m or breadth exceeds 25m | 3 |
| Dredging or underwater ops | 2 |
| Military ops | 2 |
| Sailing | 2 |
| Pleasure Craft | 2 |
| High speed craft | 2 |
| Pilot Vessel | 6 |
| Search and Rescue vessel | 6 |
| Tug | 6 |
| Port tender | 6 |
| Anti-pollution equipment | 3 |
| Law enforcement | 6 |
| Spare-Local vessel | 3 |
| Medical transport | 6 |
| Noncombatant ship according to RR Resolution No. 18 | 3 |
| Passenger | 3 |
| Cargo | 3 |
| Tanker | 3 |
| Other type | 3 |
| Length of the vessel < 50 | 1 |
| Length of the vessel > 50 | 3 |

# FIG. 4B

402

| NAVIGATION STATUS INFORMATION (430) | SECOND CLASSIFICATION GRADE (440) |
|---|---|
| Under way using engine | 0,1,2,3,4 |
| At anchor | 5 |
| Not under command | 5 |
| Restricted manoeuverability | 5 |
| Constrained by her draught | 5 |
| Moored | 5 |
| Aground | 5 |
| Engaged in Fishing | 5 |
| Power driven vessel towing astem | 6 |
| Power driven vessel pushing ahead or towing alongside | 6 |

FIG. 5

START
DEFINE PLURALITY OF AREAS CENTERED ON OWN SHIP
510
DEFINE RELATIONSHIPS BETWEEN OWN SHIP AND OTHER SHIPS ACCORDING TO DEFINED AREAS
520
DETERMINE POSSIBILITIES OF COLLISION BETWEEN OWN SHIP AND OTHER SHIPS, BASED ON SHIP OPERATION INFORMATION ABOUT OWN SHIP AND SHIP OPERATION INFORMATION ABOUT OTHER SHIPS
530
DETERMINE ENCOUNTER SITUATION WITH OTHER SHIP, BASED ON DEFINED RELATIONSHIP WITH OTHER SHIP, AND POSSIBILITY OF COLLISION WITH OTHER SHIP
540
END

FIG. 6

610
602
620
601

# FIG. 7

710
711
720
721
730
731
740
741
750
751
760
761
OT-GW
ST
CR-SO
CR-GW
HO
(180 + β)°
(180 - β)°
α°
360-α°
67.5°
112.5°
292.5°
247.5°
SF
0°
OT-SO

FIG. 8A

810
OT-GW
(811)
292.5°
67.5°
ST
CR-GW
(814)
CR-SO
(812)
HO
(813)
(180 +β)° (180 −β)°

# FIG. 8B

0°
(180 + BRG$_{OT}$ + 112.5)°
820
OT-GW
(821)
67.5°
112.5°
CR-GW
(823)
ST
SF
(822)
(180 + BRG$_{OT}$)°

FIG. 8C

0°
830
CR-GW
(831)
(180 + BRG$_{OT}$)°
ST
SF
(832)

FIG. 8D

840
OT-SO
(841)
292.5°
67.5°
ST
SF
(842)

FIG. 8E

0°
850
CR–SO
(851)
ST
(BRG OT - 180)°
SF
(852)

# FIG. 8F

860
0°
((BRGOT - 180) - 112.5)°
OT-GW
(861)
SF
(863)
ST
CR-SO
(862)
112.5°
(BRGOT - 180)°

FIG. 9A

910
911
912
913

| FIRST DATA | FIRST PARAMETER ($TCPA_{RA}$) | SECOND PARAMETER ($DCPA_{RA}$) | STATUS OF OWN SHIP |
| --- | --- | --- | --- |
| 0 | $TCPA_{undecided}$ | $DCPA_{undecided}$ | - |
| 1 | $TCPA_{alarm}$ | $DCPA_{alarm}$ | - |
| 2 | $TCPA_{alarm}$ | $DCPA_{alarm}$ | - |
| 3 | $TCPA_{undecided}$ | $DCPA_{undecided}$ | - |
| 4 | $TCPA_{alarm}$ | $DCPA_{alarm}$ | Give Way |
| 5 | $TCPA_{undecided}$ | $DCPA_{undecided}$ | Give Way |
| 6 | $TCPA_{alarm}$ | $DCPA_{alarm}$ | - |

# FIG. 9B

920
921
922
923

| SECOND DATA | FIRST PARAMETER ($TCPA_{RA}$) | SECOND PARAMETER ($DCPA_{RA}$) | STATUS OF OWN SHIP |
|---|---|---|---|
| HO | $TCPA_{warning}$ | $DCPA_{warning}$ | Give Way |
| CR-GW | $TCPA_{warning}$ | $DCPA_{warning}$ | Give Way |
| CR-SO | $TCPA_{alarm}$ | $DCPA_{alarm}$ | Stand On |
| OT-GW | $TCPA_{warning}$ | $DCPA_{warning}$ | Give Way |
| OT-SO | $TCPA_{alarm}$ | $DCPA_{alarm}$ | Stand On |
| SF | - | - | |
| ST | $TCPA_{warning}$ | $DCPA_{warning}$ | Give Way |

FIG. 10A

SECOND RISK DETERMINATION PARAMETER
WARNING CRITERION
ALARM CRITERION
Safe (1030)
Alarm (1010)
ALARM CRITERION
WARNING CRITERION
FIRST RISK DETERMINATION PARAMETER

FIG. 10B

SECOND RISK DETERMINATION PARAMETER
Safe (1030)
WARNING CRITERION
ALARM CRITERION
Warning (1020)
ALARM CRITERION
WARNING CRITERION
FIRST RISK DETERMINATION PARAMETER

## INTERNATIONAL SEARCH REPORT

International application No.
**PCT/KR2025/099495**

### A. CLASSIFICATION OF SUBJECT MATTER

**G08G 3/02**(2006.01)i; **G06F 3/14**(2006.01)i; **G06F 3/048**(2006.01)i; **B63B 49/00**(2006.01)i; **B63B 79/20**(2020.01)i; **B63H 21/21**(2006.01)i; **B63B 79/30**(2020.01)i; **B63B 79/40**(2020.01)i; **B63B 43/18**(2006.01)i

According to International Patent Classification (IPC) or to both national classification and IPC

### B. FIELDS SEARCHED

Minimum documentation searched (classification system followed by classification symbols)

G08G 3/02(2006.01); B63B 43/18(2006.01); B63B 79/40(2020.01); G05D 1/02(2006.01); G08G 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디스플레이부(display unit), 위험성(dangerousness), 선박(ship), 판단(decision), 파라미터(parameter)

### C. DOCUMENTS CONSIDERED TO BE RELEVANT

| Category* | Citation of document, with indication, where appropriate, of the relevant passages | Relevant to claim No. |
|---|---|---|
| X | WO 2019-121237 A1 (ROLLS-ROYCE PLC) 27 June 2019 (2019-06-27) See page 3, line 19 - page 6, line 27; page 10, line 4 – page 11, line 2 and page 21, lines 1-6; and claim 1. | 1,6,8-9 |
| Y | | 2-5,7,10-15 |
| Y | WO 2023-074014 A1 (FURUNO ELECTRIC CO., LTD.) 04 May 2023 (2023-05-04) See paragraphs [0097], [0102] and [0112]; and figures 1 and 5. | 2-5,7,13-14 |
| Y | KR 10-2276678 B1 (KOREA MARITIME UNIVERSITY INDUSTRY-ACADEMIC COOPERATION FOUNDATION) 13 July 2021 (2021-07-13) See paragraph [0056]. | 5,10-15 |
| A | KR 10-1800453 B1 (NEW-WORLD MARITIME CO., LTD.) 20 December 2017 (2017-12-20) See paragraphs [0029]-[0035]; and figures 1-3. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 June 2025** | **02 June 2025** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

## INTERNATIONAL SEARCH REPORT

International application No.
**PCT/KR2025/099495**

### C. DOCUMENTS CONSIDERED TO BE RELEVANT

| Category* | Citation of document, with indication, where appropriate, of the relevant passages | Relevant to claim No. |
|---|---|---|
| A | KR 10-2016-0129213 A (HYUNDAI HEAVY INDUSTRIES CO., LTD.) 09 November 2016 (2016-11-09)<br>See paragraphs [0034]-[0042]; and figure 2. | 1-15 |

Form PCT/ISA/210 (second sheet) (July 2022)

**INTERNATIONAL SEARCH REPORT**
**Information on patent family members**

International application No.
**PCT/KR2025/099495**

| Patent document cited in search report | Publication date (day/month/year) | Patent family member(s) | Publication date (day/month/year) |
|---|---|---|---|
| WO 2019-121237 A1 | 27 June 2019 | EP 3729407 A1 | 28 October 2020 |
| | | EP 3729407 B1 | 20 July 2022 |
| | | US 11915594 B2 | 27 February 2024 |
| | | US 2021-0125502 A1 | 29 April 2021 |
| WO 2023-074014 A1 | 04 May 2023 | US 2024-0270359 A1 | 15 August 2024 |
| | | WO 2023-074014 A1 | 04 May 2023 |
| KR 10-2276678 B1 | 13 July 2021 | KR 10-2276678 B9 | 12 April 2023 |
| KR 10-1800453 B1 | 20 December 2017 | KR 10-2017-0006161 A | 17 January 2017 |
| KR 10-2016-0129213 A | 09 November 2016 | KR 10-1693982 B1 | 09 January 2017 |

Form PCT/ISA/210 (patent family annex) (July 2022)